# EUROPEAN PATENT APPLICATION

(11) **EP 1 157 885 A2**
(43) Date of publication of application: **28.11.2001**
(21) Application number: 01304300.5
(22) Date of filing: 15.05.2001
(51) Int. Cl.: B60P 1/46, B60P 1/44

(54) **Method of synchronising two hydraulic cylinders and device therefore**

(30) Priority: 15.05.2000 BE 200000324
(71) Applicant: Ross & Bonnyman Limited, Forfar, Angus DD8 3DG (GB)
(72) Inventor: Spaepen, Sigrid, 2300 Turnhout (BE)
(74) Representative: Allan, James Stewart

(57) **Abstract**

The present invention relates to apparatus and a method for balancing the operation of two or more lifting devices (4a, 4b), such as hydraulic rams or cylinders, which are used, for example, to move a platform of a tail lift. The apparatus includes a flexible member (7) that extends around one or more fixed pulley wheels (8a, 8b, 8c, 9) and at least one movable pulley wheel (10). Where the cylinders (4a, 4b) operate out of balance (e.g. one cylinder is operating faster than the other) this creates a change in the tension of the flexible member (7). The change in tension causes movement of the movable pulley wheel (10) and the movement of the movable pulley wheel (10) causes a change in the operation of the cylinders (4a, 4b) to balance them (e.g. by adjusting the flow of hydraulic fluid to the cylinders (4a, 4b)).

## Description

The present invention relates to apparatus for and a method of balancing or synchronising two hydraulic rams or cylinders. The present invention relates more particularly to lifting apparatus, and especially to tail lifts that are mounted on vehicles. Tail lifts are typically mounted at the rear of the vehicle to enable the effective transfer of heavy objects between the ground and a load space in the vehicle. Although called a tail lift, such apparatus can also be located at the front or side of the vehicle instead of the rear, but it is conventional for tail lifts to be located at the rear of, for example, the load space of the vehicle.

Conventional designs of tail lifts generally incorporate a pair of spaced-apart columns at or near a rear opening of the vehicle load space, and a platform that is pivotally mounted e.g. via hinges at its base to the vehicle. The platform can generally be pivoted about the hinges to a vertical configuration in which it extends across the opening, or can be placed in a horizontal configuration to be raised and lowered relative to the columns for operation as a tail lift. The platform is typically attached to runners that are slideable on the columns and can typically be powered by cables and/or hydraulic rams in order to move the runners along a rear face of the columns.

A hydraulic or pneumatic ram or cylinder is typically located in or beside each column, with each column located on a respective side of a rear opening of the vehicle load space. The hydraulic rams or cylinders are typically used to raise and lower the platform of the tail lift while the platform is in a horizontal configuration, generally between ground level and a floor or bed of the vehicle. One ram or cylinder can often move faster or slower than the other ram or cylinder, causing an imbalance between them that can tilt the platform to one side or the other depending on which hydraulic ram or cylinder is moving faster or slower. This can be dangerous if the platform tilts through a significant angle as heavy objects can slide on the platform, and the tilting of the platform can also cause structural damage to the platform and/or the tail lift itself.

Balancing or equalising systems for synchronising the movement of two parallel cylinders or hydraulic rams are known. Some examples include mechanical fixation of the moving parts of the cylinders by cog-wheel systems or a torsion bar. Other examples include hydraulic or pneumatic fixations that use a component containing more than one cylinder that are located within a housing and the rods of the cylinders in the housing are mechanically fixated to each other, and where on the cylinder side the hydraulic oil or air is completely isolated from the power pack, and each cylinder in the component is steering a respective cylinder in the machine or lift, (see Belgian patent number 09700990 filed 9 November 1999, publication number 1011591 A6). One cylinder typically steers the other cylinder by sending oil/air from the other side of the piston to the second cylinder. This can be done by using a flow divider, with for example a double pump-system, etc.

All these systems are expensive, or not compact, or liable to extreme wear out, or are not accurate.

According to a first aspect of the invention, there is provided apparatus for controlling movement of two moving devices, the apparatus comprising a flexible member, a first end of the flexible member being adapted to move with one moving device and a second end of the flexible member being adapted to move with the other moving device, wherein variations in the tension of the flexible member causes a variation in the operation of at least one of the moving devices.

According to a second aspect of the present invention there is provided a lifting apparatus that includes first and second moving devices for lifting a platform, the apparatus further including a flexible member, a first end of the flexible member being adapted to move with one moving device and a second end of the flexible member being adapted to move with the other moving device, wherein variations in the tension of the flexible member causes a variation in the operation of at least one of the moving devices.

According to a third aspect of the present invention, there is provided a method of controlling the movement of two lifting devices, the lifting devices forming part of a lifting apparatus, the lifting devices being capable of moving a platform, the lifting apparatus including a flexible member, a first end of the flexible member being adapted to move with one ram and a second end of the flexible member being adapted to move with the other ram, the method comprising the steps of actuating the moving devices to move the platform; monitoring the tension of the flexible member; and adjusting the speed of one or both of the lifting devices.

The flexible member typically extends around one or more fixed pulley wheels and at least one movable pulley wheel. Four fixed pulley wheels are typically provided.

The movable pulley wheel is typically constrained to move along a predetermined path, e.g. in a slot. The movable pulley wheel is typically in a neutral position where it is located approximately in the centre of the slot, but can be moved to either side of the central location. The movable pulley wheel is typically biased toward the neutral position (e.g. by a spring).

Variations in the tension in the flexible member typically causes movement of the movable pulley wheel within the slot. When the tension of the flexible member is increased, the movable pulley wheel typically moves in a first direction. When the tension of the flexible member is decreased, the movable pulley wheel is typically moved in a second direction. The second direction is typically opposite the first direction. The movable pulley wheel is typically moved from the neutral position in the first or second directions against the bias.

The apparatus typically includes an adjustment means for adjusting the operation of the lifting devices or the moving devices. The adjustment means is typically actuated by movement of the movable pulley wheel.

In a first embodiment, the adjustment means typically comprises a linkage mechanism coupled to a lifting valve and a lowering valve. The linkage mechanism is typically coupled to the movable pulley wheel and movement of the movable pulley wheel causes a movement of the linkage mechanism. In an alternative embodiment, the adjustment means may comprise one or more relays that are actuated by movement of the movable pulley wheel.

The lifting valve and the lowering valve typically comprise flow dividers. The lifting valve and the lowering valve typically each include first and second variable control valves. The first and second variable control valves may comprise solenoid operated valves so that they may be electronically actuated. One of the first and second variable control valves is coupled to one of the lifting or moving devices, and the other of the first and second variable control valves is coupled to the other of the lifting or moving devices.

Movement of the linkage mechanism typically causes one of the first and second variable control valves to be opened, and the other of the variable control valves to be closed. Thus, the speed of operation of the moving or lifting devices can be adjusted by the opening and closing of the variable control valves.

The or each moving device typically comprises a ram or cylinder. The or each lifting device typically comprises a ram or cylinder.

Each ram typically includes a piston that is movable within a cylinder. The platform is typically attached to each ram at one end thereof.

The rams typically comprise hydraulic cylinders or rams. It will be appreciated that the invention can be used with any ram or cylinder.

One end of the flexible member may be coupled to a piston of one of the rams, and the other end of the flexible member may be coupled to a piston of the other ram. Alternatively, one end of the flexible member may be coupled to a cylinder of one of the rams, and the other end of the flexible member may be coupled to a cylinder of the other ram. In a further alternative embodiment, one end of the flexible member may be coupled to a first side of the platform, and the other end of the flexible member may be coupled to a second side of the platform.

The step of monitoring the tension in the flexible member typically includes the additional step of monitoring the position of the movable pulley wheel within the slot.

The step of adjusting the speed of one or both of the moving or lifting devices typically includes the additional step of opening and/or closing the first and/or second variable control valves to adjust the amount of hydraulic fluid being passed to one or both of the moving or lifting devices.

Embodiments of the present invention shall now be described, by way of example only, and with reference to the accompanying drawings, in which:-
Fig. 1 is a first embodiment of apparatus for balancing two hydraulic rams or cylinders, where the apparatus is located above the rams or cylinders;
Fig. 2 is a second embodiment of apparatus for balancing two hydraulic rams or cylinders, where the apparatus is located below the rams or cylinders;
Fig. 3 is a third embodiment of apparatus for balancing two hydraulic rams or cylinders, where the apparatus is located above and to one side of the rams or cylinders;
Fig. 4a is an end elevation of a tail lift apparatus provided on the rear of a vehicle;
Fig. 4b is a side elevation of the tail lift apparatus and vehicle of Fig. 4a; and
Fig. 5 is a schematic representation of an embodiment of a hydraulic circuit for use with the apparatus of Figs 1, 2, 3 or 4a, 4b.

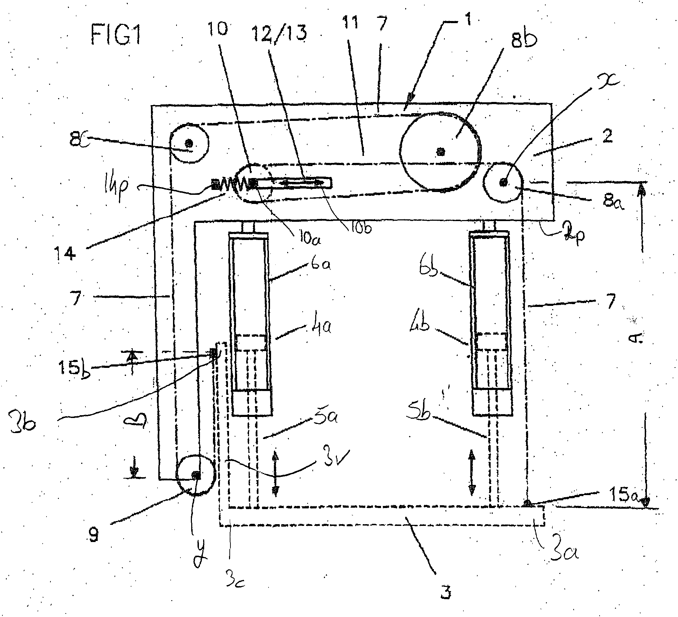

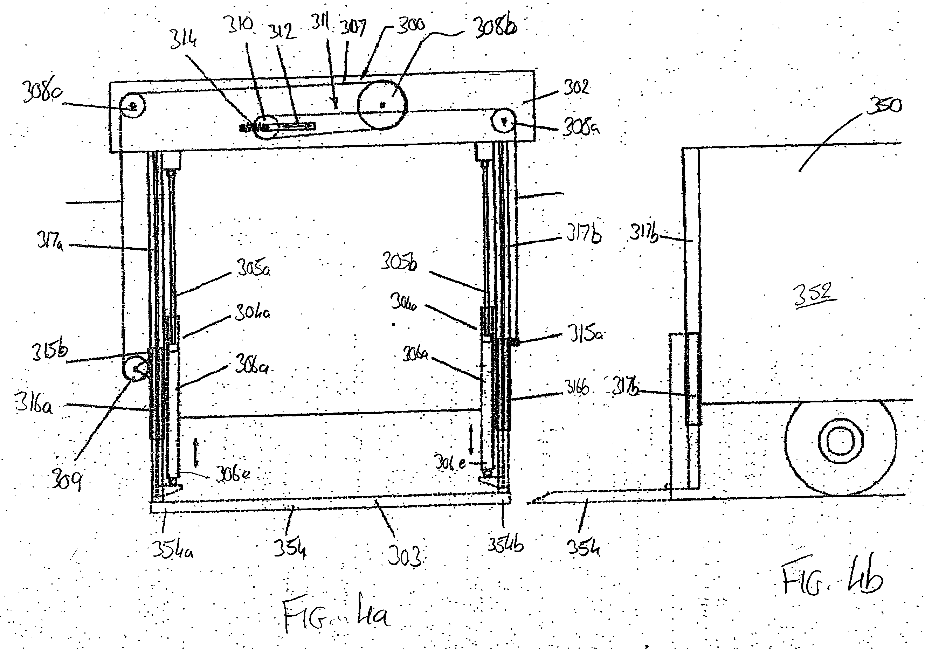

Referring to the drawings, Fig. 1 shows a first embodiment of apparatus 1 for balancing two hydraulic rams or cylinders 4a, 4b that are used to raise and lower a movable frame 3. The movable frame 3 may be a platform (e.g. platform 354 in Figs 4a and 4b) that forms part of a conventional tail lift that is provided at, for example, the rear of a vehicle 350 at an opening to a load space 352 of the vehicle 350 (see Figs 4a and 4b). However, the movable frame 3 may be any apparatus that is moved (e.g. up and down or side to side) by two or more cylinders.

Apparatus 1 includes a fixed frame 2 that is fixed at any convenient location. For example, the fixed frame 2 may be coupled to an upper portion of the vehicle 350. In the example shown in Fig. 1, the fixed frame 2 is attached above the cylinders 4a, 4b.

Apparatus 1 includes a flexible member 7 that may be a chain, belt, cable or the like, one end of which is attached to an end 3a of the movable frame 3 at connection 15a, and the other end of the flexible member 7 is attached to a second end 3b of the frame 3 at connection 15b. The frame 3 includes a vertical extension 3v, that is attached to an end 3c of the frame 3. The useful part of the frame 3 (e.g. in the case of a tail lift, the horizontal portion of the platform on which goods can be placed) is generally between end 3a and end 3c.

The flexible member 7 extends upwardly towards a first pulley wheel 8a and extends around a portion of the first pulley wheel 8a to change direction through around 90°. The position of the first pulley wheel 8a is fixed with respect to the fixed frame 2 (i.e. it cannot move relative to the fixed frame 2).

The flexible member 7 is directed at a movable pulley wheel 10 by the first pulley wheel 8a. The movable pulley wheel 10 includes a fixing pin 10a that is slidably located in a channel or rail 12 that is held in place by a holder 13. Thus, the movable pulley wheel 10 can move towards and away from the first pulley wheel 8a, as indicated by arrow 10b, as the fixing pin 10a slides within the channel 12.

The fixing pin 10a of the movable pulley wheel 10 is normally biased (e.g. by a spring 14) towards an equilibrium position, where the fixing pin 10a of the movable pulley wheel 10 is approximately central in the channel 12. Thus, the movable pulley wheel 10 can move to the left and to the right, as shown in Fig. 1. Spring 14 is coupled at a first end to the fixing pin 10a and at a second end to a fixed point 14p.

The flexible member 7 extends around the movable pulley wheel 10 through around 180° so that it is directed towards a second (larger) pulley wheel 8b. The second pulley wheel 8b is fixed in position relative to the fixed frame 2 and cannot move. The second pulley wheel 8b turns the flexible member through approximately 180° so that it goes back in the opposite direction towards a third pulley wheel 8c. The third pulley wheel 8c is also fixed relative to the fixed frame 2 and cannot move.

The flexible member 7 extends around the third pulley wheel 8c through approximately 90° and is directed towards a fourth pulley wheel 9. The fourth pulley wheel 9 is attached at a lower end of the fixed frame 2 and cannot move relative to the frame 2, but the wheel 9 may be located on a portion of the vehicle that is provided at an appropriate location. The flexible member 7 extends around the fourth pulley wheel 9 through around 180° so that it extends approximately parallel to the vertical extension 3v of the movable frame 3 and terminates at connection 15b. The vertical extension 3v is required to bring the attachment point of the cable 7 (i.e. connection 15b) above the fourth pulley wheel 9.

The pulley wheels 8a, 8b, 8a, 9, 10 may be replaced by sprockets where the flexible member 7 comprises a chain. However, the pulley wheels 8a, 8b, 8a, 9, 10 may comprise any suitable type that corresponds to the particular type of flexible member used.

The apparatus 1 functions on the following principle. When the movable frame 3 (e.g. a loading platform 354 of a tail lift) is equalised (i.e. parallel with a lower portion 2p of the fixed frame 2 (e.g. when the movable frame 3 is level with the loading floor of the vehicle 350)), there is defined a first distance A on one side of the movable frame 3 from a first chosen point on the one side of the movable frame 3 (e.g. connection 15a) up to a chosen point on the fixed frame 2 (e.g. the axis x of the first pulley wheel 8a). There is further defined a second distance B on the other side of the movable frame 3 from a first chosen point (e.g. the axis y of the fourth pulley wheel 9) to a second chosen point (e.g. the connection 15b) on the fixed frame 2. A further sum C is defined as the sum or total of both the distances A and B.

A cylinder (elevating cylinders) 4a, 4b is positioned on each side of the movable frame 3 and the longitudinal axes of the cylinders 4a, 4b are substantially parallel to one another. When the movable frame 3 moves up and down, the distances A and B will change individually, but the sum of these distances A and B (i.e. sum C) will not change.

If the cylinders 4a, 4b are not operating in synchronisation with one another, i.e. one of the cylinders 4a, 4b is moving faster or slower than the other, then the sum C will change. If one of the cylinders 4a, 4b is operating faster than the other, then the sum C will increase as, for example, the distance A will increase. If one of the cylinders 4a, 4b is operating slower than the other, then the sum C will decrease as, for example, the distance B will become shorter. The change in the sum C is represented by a slackening or tightening of the flexible member 7. For example, if sum C increases, then the tension in the flexible member 7 will increase. If sum C decreases, then the tension in the flexible member will decrease (i.e. it will become slack).

The change in tension of the flexible member 7 is used to balance the operation of the cylinders 4a, 4b. The coupling of the flexible member 7 as described above provides a loop 11 made in the flexible member 7 by which a first part of the flexible member 7 is led over one or more fixed pulley wheels (i.e. wheels 8a, 8b and 8c) and a second part of the flexible member 7 extends over a movable pulley wheel 10. The length of said loop 11 (that is the tension in the flexible member 7) depends on the tolerance between the movement of the two cylinders 4a, 4b. That is, the length of the loop 11 is dependent upon whether the pistons 5a, 5b within the housings 6a, 6b are moving in synchronisation with one another.

The cylinders 4a, 4b can be sped up or slowed down by adjusting the amount of hydraulic fluid that is transferred by a hydraulic power unit (not shown in Fig. 1) to the cylinders 4a, 4b. By providing a movable pulley wheel 10 that is constrained to move along a specific path (i.e. the path defined by the channel 12) the movement of the individual cylinders 4a, 4b can be balanced so that they move in synchronisation by detecting the movement of the pulley wheel 10. The equalisation, balancing or synchronisation can be actuated by means of electronic detection, by means of electric taps and/or valves, or by means of a direct mechanism with taps and eventual valves.

The movement of the movable pulley wheel 7 not only changes the length of the loop 11 and this represents a change in the sum C (i.e. the total of distances A and B). The change in sum C can be used to balance the operation of the two cylinders 4a, 4b by sensing the change in the tension of the flexible member 7. For example, if the sum C increases, then the tension in the flexible member 7 also increases and this indicates that one of the cylinders 4a, 4b is operating faster than the other. This can then be used to actuate a valve or tap so that the flow of hydraulic fluid that actuates the appropriate cylinder 4a, 4b is reduced, and thus the speed of operation of the cylinder 4a, 4b is also reduced. If the sum C decreases, then this is represented by a slackening in the tension of the flexible member, indicating that one of the cylinders 4a, 4b is operating slower than the other. This can then be used to actuate a valve or tap so that the flow of fluid that actuates the appropriate cylinder 4a, 4b is increased, and thus the speed of operation of the cylinder 4a, 4b is also increased. Thus, the value of the sum C can be used to monitor and control the balancing of the cylinders 4a, 4b.

The movable pulley wheel 10 is coupled to a means (not shown in Fig. 1) that is actuated by movement of the movable pulley wheel 10. For example, the means may comprise one or more flow regulating taps or valves, that are directly or indirectly actuated an de-actuated by movement of the movable pulley wheel 10. If two taps or valves are used, one of the two taps or valves is either opened or closed if cylinders 4a, 4b are out of balance, thereby adjusting the flow of hydraulic oil or fluid to the cylinders 4a, 4b. For example, if cylinder 4a is operating faster than cylinder 4b, then the tap or valve associated with cylinder 4a can be closed to slow down cylinder 4a until its movement is in balance or synchronisation with cylinder 4b. Alternatively, if cylinder 4a is operating slower than cylinder 4b, then the tap or valve associated with cylinder 4a can be opened to speed up cylinder 4a until its movement is in balance or synchronisation with cylinder 4b. It is possible to use only one tap or valve, whereby the fluid to the cylinders 4a, 4b (e.g. air or oil etc) is automatically switched by the tap or valve to the cylinder 4a, 4b that requires to be adjusted (e.g. sped up or slowed down). For example, the one tap or valve may be a flow divider that is electronically or otherwise controlled to divide the flow between the cylinder 4a, 4b as required, or can be a two-way valve where in one configuration, the valve directs more fluid to one cylinder 4a, 4b, and in a second configuration, directs more fluid to the other cylinder 4a, 4b.

Upon movement of the movable frame 3 (e.g. upward or downward in case of for example the platform a tail lift on a vehicle), the most-charged cylinder 4a, 4b (i.e. the cylinder that has the most fluid directed to it) will be moved faster than the other, and the amount of fluid to said cylinder 4a, 4b can be reduced to balance the cylinders 4a, 4b.

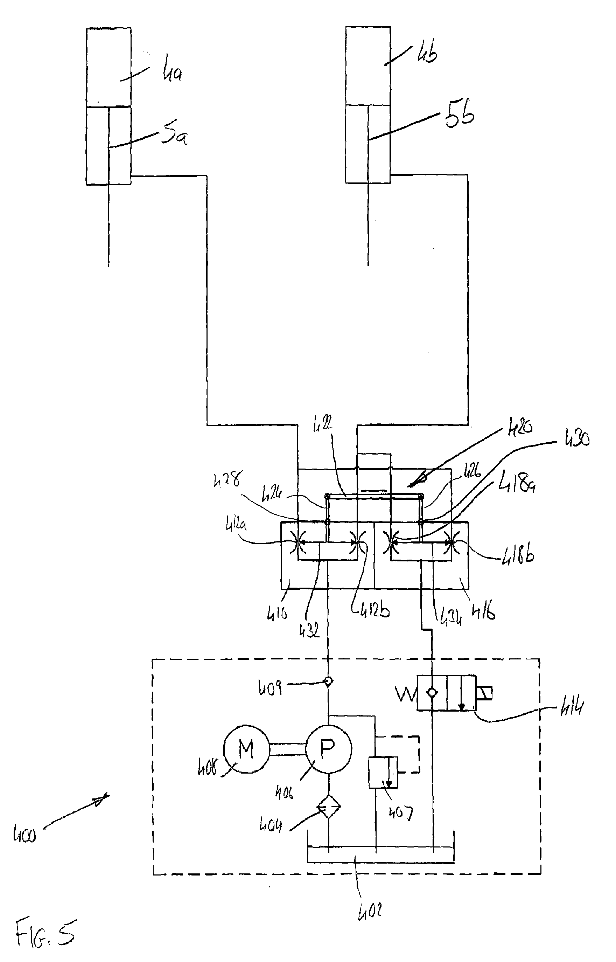

For example, and with reference to Fig. 5, there is shown a schematic representation of a hydraulic system 400 that can be used to control the operation of the cylinders 4a, 4b. The system 400 includes a hydraulic oil tank 402 from which hydraulic oil is drawn through a filter 404 by a pump 406. The pump 406 is typically operated by a DC motor 408, and draws oil from the tank 402 to a lifting valve 410 (typically a flow divider). A pressure relief valve 407 is coupled across the pump 406 so that pressure can be released in the event of an emergency, or otherwise as required by operating the relief valve 407.

The lifting valve 410 includes two variable control valves 412a, 412b. Variable control valve 412a is coupled to the piston 5a of cylinder 4a, and variable control valve 412b is coupled to the piston 5b of cylinder 4b. Thus, oil is pumped by the motor 408 and the pump 406 from the tank 402 (*via* a one-way or check valve 409) into the cylinders 4a, 4b below the pistons 5a, 5b to push them upwards thus raising the movable frame 3.

When it is desired to lower the movable frame 3, the pump 406 is de-actuated and the movable frame 3 lowers due to gravity. However, this requires a return path for the hydraulic oil back to the tank 404 via a solenoid operated valve 414. The hydraulic oil flows through a lowering valve 416 (typically a flow divider) that includes two variable control valves 418a, 418b. Variable control valve 418a is coupled to the piston 5a of cylinder 4a, and variable control valve 418b is coupled to the piston 5b of cylinder 4b. Thus, hydraulic oil is returned from the return side of the piston 5a, 5b *via* the variable control valves 418a, 418b and the solenoid operated valve 414 to the tank 402.

The opening and closing (i.e. variation) of the variable control valves 412a, 412b, 418a, 418b is controlled by a linkage mechanism 420. An upper bar 422 of the linkage mechanism 420 is coupled to the fixing pin 10a of the movable pulley wheel 10. The upper bar is pivotally coupled to two side bars 424, 426 that can pivot about a pivot 428, 430 in the valves 410, 416.

With reference to Figs 1 5, when the movable frame 3 is being lifted and the piston rod 5a of cylinder 4a is extending faster than piston rod 5b of cylinder 4b, then the loop 11 will tighten pulling the movable pulley wheel 10 towards the right in Fig. 1 against the bias of spring 14. The movement of the pulley wheel 10 to the right causes the upper bar 422 of the linkage mechanism 420 also to move to the right. As the movable frame 3 is being lifted, only the lifting valve 410 need be considered, as the lowering valve 416 will have no effect on the system 400 because the solenoid operated valve 414 is closed and thus there is no return path fir the hydraulic oil back to the tank 402. The movement of the upper bar 422 causes a bar 432 that is attached to the side bar 424 to move to the left because of the pivot 428, thereby closing the variable control valve 412a and further opening the variable control valve 412b. This causes less hydraulic oil to be directed to cylinder 4a thus slowing it down, and more oil to be directed to cylinder 4b, causing it to speed up. As cylinder 4a slows down and cylinder 4b speeds up, the operation of the two cylinders 4a, 4b becomes balanced, the tension in the flexible member 7 will slacken off, and the movable pulley wheel 10 will return to its equilibrium position. In this position, the flow of oil to the cylinders 4a, 4b is substantially equalised, as the linkage mechanism 422 resets to its original configuration, as shown in Fig. 5.

When the movable frame 3 is being lifted and the piston rod 5b of cylinder 4b is extending faster than piston rod 5a of cylinder 4a, then the loop 11 will slacken pulling the movable pulley wheel 10 towards the left in Fig. 1 against the bias of spring 14. The movement of the pulley wheel 10 to the left causes the upper bar 422 of the linkage mechanism 420 also to move to the left. The movement of the upper bar 422 causes the bar 432 that is attached to the side bar 424 to move to the right because of the pivot 428, thereby closing the variable control valve 412b and further opening the variable control valve 412a. This causes less hydraulic oil to be directed to cylinder 4b thus slowing it down, and more oil to be directed to cylinder 4a, causing it to speed up. As cylinder 4b slows down and cylinder 4a speeds up, the operation of the two cylinders 4a, 4b becomes balanced, the tension in the flexible member 7 will increase, and the movable pulley wheel 10 will return to its equilibrium position. In this position, the flow of oil to the cylinders 4a, 4b is substantially equalised, as the linkage mechanism 422 resets to its original configuration, as shown in Fig. 5.

When the movable frame 3 is being lowered and the piston rod 5a of cylinder 4a is retracting faster than piston rod 5b of cylinder 4b, then the loop 11 will slacken pulling the movable pulley wheel 10 towards the left in Fig. 1. The movement of the pulley wheel 10 to the left causes the upper bar 422 of the linkage mechanism 420 also to move to the left. As the movable frame 3 is being lowered, only the lowering valve 416 need be considered, as the lifting valve 410 will have no effect on the system 400 because the motor 408 is not operated and thus the pump 406 will be inactive. The movement of the upper bar 422 causes a bar 434 that is attached to the side bar 426 to move to the right because of the pivot 430, thereby closing the variable control valve 418b and further opening the variable control valve 418a. This causes the flow of hydraulic oil from the cylinder 4a to the tank 402 to be decreased thus causing it to retract slower, and more oil to flow from the cylinder 4b, thus causing it to retract faster. As the retraction of cylinder 4a slows down and the retraction of cylinder 4b speeds up, the operation of the two cylinders 4a, 4b becomes balanced, the tension in the flexible member 7 will tighten, and the movable pulley wheel 10 will return to its equilibrium position. In this position, the flow of oil from the cylinders 4a, 4b is substantially equalised, as the linkage mechanism 422 resets to its original configuration, as shown in Fig. 5.

When the movable frame 3 is being lowered and the piston rod 5b of cylinder 4b is retracting faster than piston rod 5a of cylinder 4a, then the loop 11 will tighten pulling the movable pulley wheel 10 towards the right in Fig. 1. The movement of the pulley wheel 10 to the right causes the upper bar 422 of the linkage mechanism 420 to move to the right. The movement of the upper bar 422 causes the bar 434 to move to the left because of the pivot 428, thereby closing the variable control valve 418a and further opening the variable control valve 418b. This causes less hydraulic oil to be drained from cylinder 4b thus slowing down the retraction of piston 5b, and more oil to be drained from cylinder 4a, causing it to retract faster. As the retraction of cylinder 4b slows down and the retraction of cylinder 4a speeds up, the operation of the two cylinders 4a, 4b becomes balanced, the tension in the flexible member 7 will decrease or slacken, and the movable pulley wheel 10 will return to its equilibrium position. In this position, the flow of oil to the cylinders 4a, 4b is substantially equalised, as the linkage mechanism 422 resets to its original configuration, as shown in Fig. 5.

As an alternative to the embodiment shown in Fig. 5, the movement of the movable pulley wheel 10 may actuate an electronic sensor or switch that in turn actuates a relay. The relay can be electronically linked, rather than mechanically linked, to the lifting and lowering valves 410, 416 to control the operation of the variable control valves 412a, 412b, 418a, 418b.

The flexible member 7 connects both cylinders 4a, 4b with each other, through the various pulley wheels 8a, 10, 8b, 8c and 9. The flexible member 7 can be connected on the moving parts of the cylinders 4a, 4b (e.g. the piston rods 5a, 5b), the movable frame 3, or the runners (slides) of a tail lift.

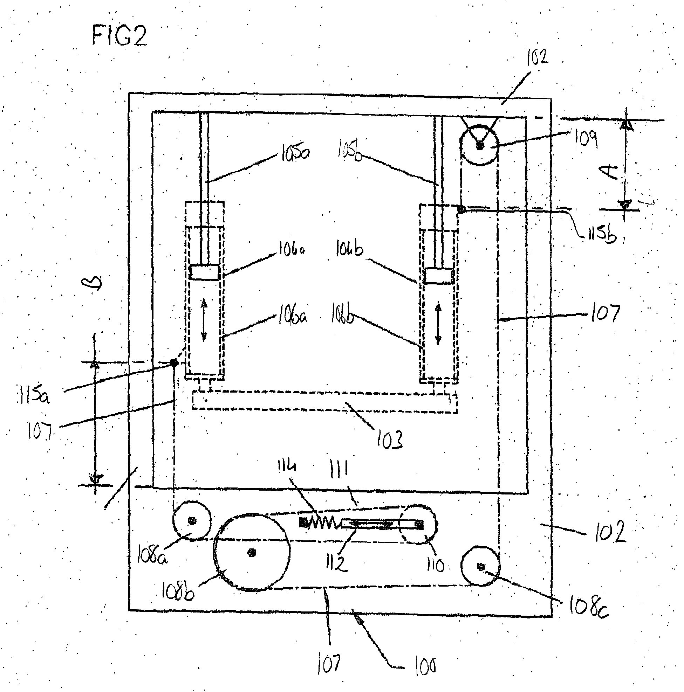

Fig. 2 shows an alternative embodiment of apparatus 100 for balancing two hydraulic rams or cylinders 104a, 104b that are used to raise and lower a movable frame 103. Apparatus 100 is substantially the same as apparatus 1, and like reference numerals have been used to designate like parts prefixed "1". The main difference between the embodiments of Figs 1 and 2 is that apparatus 100 is disposed below the movable frame 103 rather than above it. Apparatus 100 operates in substantially the same manner as apparatus 1 and provides the same advantages.

Also in Fig. 2, the pistons 105a, 105b are rigidly attached to the fixed frame 2, and the housings 106a, 106b of the cylinders 104a, 104b move with the movable frame 103. However an end 115a of the flexible member 107 is attached to the housing 106a of cylinder 104a, and the other end 115b of the flexible member 107 is attached to the housing 106b of the cylinder 104b. Thus, the tension in the flexible member 107 will vary as the housings 106a, 106b move with the movable frame 103.

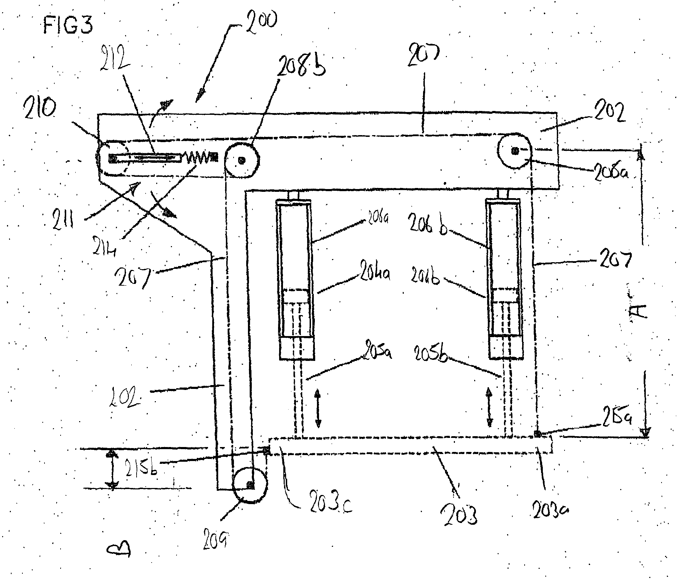

Similarly, Fig. 3 shows a further alternative embodiment of apparatus 200 for balancing two hydraulic rams or cylinders 204a, 204b that are used to raise and lower a movable frame 203. Apparatus 200 is substantially the same as apparatus 1, 100 and like reference numerals have been used to designate like parts prefixed "2". The main difference between the embodiments of Figs 1 and 2 and that of Fig. 3 is that apparatus 200 is disposed above and to the left (as viewed in Fig. 3) of the movable frame 303. Apparatus 200 operates in substantially the same manner as apparatus 1, 100 and provides the same advantages. It will be noted that the embodiment shown in Fig. 3 uses only three pulley wheels 208a, 208b and 209, but operates using the same principle.

Also in Fig. 3, the vertical extension 3v to the movable frame 3 is not required, as the fourth pulley wheel 9 is located below the level of the frame 3.

As a further alternative, the apparatus 1, 100, 200 may be located above and to the right of the movable frame 3, 103, 203, or may be located below and to the left or right of the movable frame 3, 103, 203.

Referring now to Figs 4a and 4b, there is shown apparatus 300 attached to the rear of a vehicle 350 (e.g. a light goods vehicle, van or the like). Apparatus 300 is similar to the apparatus 1, 100, 200 described above. As before, each hydraulic cylinder 304a, 304b includes a rod or piston 305a, 305b that is slidably mounted in a housing 306a, 306b. In this embodiment, the rods 305a, 305b are attached to the fixed frame 302, the fixed frame 302 being coupled to an upper portion of the vehicle 350.

The housings 306a, 306b are coupled at a lower end 306e thereof to a lower end of an inner slide 316a, 316b. The inner slides 316a, 316b are coupled to a platform 354 that forms a part of the movable frame 303, and can slide within a column 317a, 317b. Thus, the platform 354 moves up and down with the inner slides 316a, 316b that move within the columns 317a, 317b as the cylinders 304a, 304b are actuated.

Each column 317a, 317b is generally provided with a fixing clamp (not shown) that is provided with apertures (not shown) that allows the column 317a, 317b to be attached to the rear of the vehicle 350 (e.g. using bolts).

The cylinders 304a, 304b located on either side of the opening to the vehicle load space 352 are not mechanically linked other than through the platform 254. It will be appreciated that although the cylinders 304a, 304b are mechanically linked via the platform 354, the cylinders 304a, 304b can operate at different speeds as movement of the pistons 305a, 305b and thus the inner slides 316a, 316b are independent of one another.

The platform 354 generally has a tolerance of between 5 and 10mm difference between a first side 354a and a second side 354b of the platform 354, over a typical width of 2 metres.

The apparatus 300 operates on the same principle as above to ensure that the platform 354 remains level, despite the fact that the cylinders 304a, 304b may be operating at different speeds.

The invention can be used in applications in all sorts of hydraulic and pneumatic machines and means of elevating where the operation of two or more cylinders or rams is required to be balanced.

It will generally be appreciated that the preferred method to synchronise the cylinders 304a, 304b is to slow down the cylinder that is moving faster than the other. This is because there are potential hydraulic problems with speeding up the cylinder that is slower than the other because if the variable control valves 412a, 412b, 418a, 418b are opened up fully, the hydraulic cylinder cannot be made to go any faster and the imbalance between the ends 354a, 354b and the platform 354 cannot be rectified.

Certain embodiments of the present invention provide numerous advantages. For example, embodiments of the present invention provide a flexible member where the tension in the flexible member is used to automatically control the actuation of the cylinders, thus providing a means to balance them. This provides the advantage that certain embodiments of the present invention can be accurate as the adjustment of the cylinders is made in response to an imbalance between them.

The apparatus in certain embodiments of the invention can be made relatively compact and at relatively low cost. Further, embodiments of the present invention are less prone to wear. In the event that the flexible member stretches or breaks, it can be replaced relatively easily.

The present invention, in certain embodiments, therefore provides apparatus and a method that can be used to ensure that two hydraulic or other cylinders that are operating independently of one another are operating in synchronisation.

Modifications and improvements may be made to the foregoing without departing from the scope of the present invention. For example, it will be appreciated that the present invention has been described with relation to hydraulic cylinders, but it will be generally appreciated that the invention can be used with any type of cylinder. Also, the invention has been described in relation to a tail lift, but it will be appreciated that it could be used with any apparatus that includes two cylinders that require to be synchronised.

## Claims

1. Apparatus for controlling movement of two moving devices (4a, 4b, 104a, 104b, 204a, 204b, 304a, 304b), the apparatus comprising a flexible member (7, 107, 207, 307), a first end of the flexible member (7, 107, 207, 307) being adapted to move with one moving device (4a, 4b, 104a, 104b, 204a, 204b, 304a, 304b) and a second end of the flexible member (7, 107, 207, 307) being adapted to move with the other moving device (4a, 4b, 104a, 104b, 204a, 204b, 304a, 304b), wherein variations in the tension of the flexible member (7, 107, 207, 307) causes a variation in the operation of at least one of the moving devices (4a, 4b, 104a, 104b, 204a, 204b, 304a, 304b).

2. A lifting apparatus that includes first and second moving devices (304a, 304b) for moving a platform (354), the apparatus further including a flexible member (307), a first end of the flexible member (307) being adapted to move with one moving device (304a, 304b) and a second end of the flexible member (307) being adapted to move with the other moving device (304a, 304b), wherein variations in the tension of the flexible member (307) causes a variation in the operation of at least one of the moving devices (304a, 304b).

3. Apparatus according to claim 1 or claim 2, wherein the flexible member (7, 107, 207, 307) extends around one or more fixed pulley wheels (8a, 8b, 8c, 9, 108a, 108b, 108c, 109, 208a, 208b, 209, 308a, 308b, 308c, 309) and at least one movable pulley wheel (10, 110, 210, 310).

4. Apparatus according to claim 3, wherein the movable pulley wheel (10, 110, 210, 310) is constrained to move along a predetermined path (12, 112, 212, 312).

5. Apparatus according to claim 4, wherein the predetermined path comprises a slot (12, 112, 212, 312) and wherein the movable pulley wheel (10, 110, 210, 310) is in a neutral position when it is located approximately in the centre of the slot (12, 112, 212, 312).

6. Apparatus according to claim 5, wherein the movable pulley wheel (10, 110, 210, 310) is biased toward the neutral position.

7. Apparatus according to claim 5 or claim 6, wherein variations in the tension in the flexible member (7, 107, 207, 307) causes movement of the movable pulley wheel (10, 110, 210, 310) within the slot (12, 112, 212, 312).

8. Apparatus according to claim 7, wherein when the tension in the flexible member (7, 107, 207, 307) is increased, the movable pulley wheel (10, 110, 210, 310) is moved in a first direction.

9. Apparatus according to claim 7 or claim 8, wherein when the tension of the flexible member (7, 107, 207, 307) is decreased, the movable pulley wheel (10, 110, 210, 310) is moved in a second direction.

10. Apparatus according to claim 9, wherein the second direction is opposite to the first direction.

11. Apparatus according to any one of claims 7 to 10, wherein the movable pulley wheel (10, 110, 210, 310) is moved from the neutral position in the first or second directions against the bias.

12. Apparatus according to any one of claims 3 to 11, wherein the apparatus includes an adjustment means for adjusting the operation of the moving devices (4a, 4b, 104a, 104b, 204a, 204b, 304a, 304b).

13. Apparatus according to claim 12, wherein the adjustment means is actuated by movement of the movable pulley wheel (10, 110, 210, 310).

14. Apparatus according to claim 12 or claim 13, wherein the adjustment means comprises a linkage mechanism (420) coupled to a lifting valve (410) and a lowering valve (416).

15. Apparatus according to claim 14, wherein the linkage mechanism (420) is coupled to the movable pulley wheel (10, 110, 210, 310) and movement of the movable pulley wheel (10, 110, 210, 310) causes a movement of the linkage mechanism (420).

16. Apparatus according to claim 12 or claim 13, wherein the adjustment means comprises one or more relays that are actuated by movement of the movable pulley wheel (10, 110, 210, 310) to operate a lifting (410) and/or a lowering valve (416).

17. Apparatus according to any one of claims 14 to 16, wherein the lifting valve (410) and the lowering valve (416) each include first and second variable control valves (412a, 412b, 418a, 418b).

18. Apparatus according to claim 17, wherein one of the first and second variable control valves (412a, 412b, 418a, 418b) is coupled to one of the moving devices (4a, 4b, 104a, 104b, 204a, 204b, 304a, 304b), and the other of the first and second variable control valves (412a, 412b, 418a, 418b) is coupled to the other of the moving devices (4a, 4b, 104a, 104b, 204a, 204b, 304a, 304b).

19. Apparatus according to claim 17 or claim 18, wherein movement of the movable pulley wheel (10, 110, 210, 310) causes one of the first and second variable control valves (412a, 412b, 418a, 418b) to be opened, and the other of the variable control valves (412a, 412b, 418a, 418b) to be closed.

20. A method of controlling the movement of two lifting devices (304a, 304b), the lifting devices (304a, 304b) forming part of a lifting apparatus, the lifting devices (304a, 304b) being capable of moving a platform (354), the lifting apparatus including a flexible member (307), a first end of the flexible member (307) being adapted to move with one lifting device (304a, 304b) and a second end of the flexible member (307) being adapted to move with the other lifting device (304a, 304b), the method comprising the steps of actuating the lifting devices (304a, 304b) to move the platform (354); monitoring the tension of the flexible member (307); and, adjusting the speed of one or both of the lifting devices (304a, 304b).

21. A method according to claim 20, wherein the flexible member (307) extends around one or more fixed pulley wheels (308a, 308b, 308c, 309) and at least one movable pulley wheel (310).

22. A method according to claim 21, wherein the movable pulley wheel (310) is constrained to move in a predetermined path (312).

23. A method according to claim 22, wherein the predetermined path is a slot (312) and the step of monitoring the tension in the flexible member (307) includes the additional step of monitoring the position of the movable pulley wheel (310) within the slot (312).

24. A method according to any one of claims 20 to 23, wherein the or each lifting device (304a, 304b) comprises a hydraulic ram (304a, 304b).

25. A method according to claim 24, wherein the step of adjusting the speed of one or both of the lifting devices (304a, 304b) includes the additional step of adjusting the amount of hydraulic fluid to the lifting devices (304a, 304b).
